# EUROPEAN PATENT SPECIFICATION

(11) **EP 3 318 391 B1**
(45) Date of publication and mention of the grant of the patent: **08.01.2020**
(21) Application number: 17200002.8
(22) Date of filing: 03.11.2017
(51) Int. Cl.: B29C 65/36, B65B 9/20, B65B 51/22, B65B 51/30, H05B 6/10, H05B 6/36, B29C 65/74

(54) **INDUCTION SEALING HEAD FOR AN AUTOMATIC MACHINE**
INDUKTIONSVERSIEGELUNGSKOPF FÜR EINE AUTOMATISCHE MASCHINE
TÊTE DE SCELLAGE PAR INDUCTION DESTINÉE À UNE MACHINE AUTOMATIQUE

(30) Priority: 03.11.2016 IT 201600110615
(43) Date of publication of application: 09.05.2018
(73) Proprietor: G.D SOCIETA' PER AZIONI, 40133 Bologna (IT)
(72) Inventor: CARBONI, Salvatore, 40135 Bologna (IT); NAVACCHIA, Eugenio, 40126 Bologna (IT); VITALI, Antonio, 40062 Molinella (IT); BIONDI, Andrea, 40133 Bologna (IT)
(74) Representative: Marchitelli, Mauro

(56) References cited:
- EP-A1- 1 231 149
- EP-A1- 2 781 325
- CH-A5- 676 958

## Description

### TECHNICAL FIELD

The present invention relates to an induction sealing head for an automatic machine.

The present invention finds advantageous application in an automatic machine for filling containers for pourable products, to which the present description will make explicit reference without any loss of generality.

### PRIOR ART

For many years, containers (disposable or re-closable) have been available on the market, which are made by bending and sealing a multilayer wrapping sheet (that is, formed by layers of different materials coupled together) and are used for the distribution of pourable products (i.e. fluid products being formless and therefore taking the form of the object in which they are contained, said fluid products can be liquid, powdery, granular or semi-solid). These containers can generally be used for the distribution of foodstuff products (for example wine, milk, fruit juices, syrups, drinks, sauces, creams, yoghurt, puree, preserved products, vegetables, legumes, canned tomatoes...).

By way of example, the multilayer wrapping sheet is formed by an outer layer made of transparent polyethylene (heat-sealable as it melts at relatively low temperatures), a subsequent structural layer made of cardboard, a subsequent aluminium barrier layer, and an inner layer made of transparent polyethylene (heat-sealable as it melts at relatively low temperatures).

A common container for pourable products has a parallelepiped shape and has four side walls (two by two parallel and opposite each other) and two bottom walls, upper and lower, respectively, which are perpendicular to the four side walls. The container comprises a longitudinal seal and two cross seals, each of which is arranged at a respective bottom wall and has a sealing fin which is initially perpendicular to the respective bottom wall and is subsequently folded against the bottom wall by 90°; each bottom wall has at its ends two triangular wings (also called "*ears*") which can be folded against respective side walls or against the bottom wall itself. Typically, the triangular wings at the upper bottom wall are folded against respective side walls (and fixed to the side walls by means of heat-sealing) while the triangular wings at the lower bottom wall are folded against the lower bottom wall itself (and fixed to the lower bottom wall by means of heat-sealing).

For example, patent application EP2781325A1 describes a machine for forming and filling a container for pourable products by bending and heat-sealing a wrapping sheet (previously provided with pre-weakened folding lines) which is part of a strip of wrapping material (wound in a reel). The vertically arranged wrapping sheet is bent in a tube thus overlapping two opposed longitudinal edges which are heat-sealed on one another by means of a longitudinal seal and then a dose of pourable product is fed into the tube; finally, the tube is closed at the upper and lower part by means of two respective cross seals (which form two corresponding sealing fins having the four triangular wings) thus causing the forming of the container which initially has a *"cushion-like"* shape. Simultaneously with the forming of the seals, the wrapping sheet is cut crossly to separate the wrapping sheet from the strip of wrapping material (i.e. the *"cushion-like"* shaped container is formed by the bent and sealed wrapping sheet).

At the same time or later with the forming of the cross seals, the container can be shaped (for example by means of a pair of hollow shells which compress the container between each other thus imposing a predefined shape to the container) to assume a definitive parallelepiped shape (as initially the container assumes on a *"cushion-like"* shape).

According to what is described in the patent application EP2781325A1, the sealing device which performs the cross seal comprises an induction sealing head provided with a tubular (namely internally hollow) conductor element which is bent in a "U" shape so as to form two distinct and separate sealing areas between which a blade operates, which performs a transverse cut of the blank. The tubular conductor element is embedded in a support body made of a plastic material which is over-moulded around the tubular conductor body itself. The operating surface of the induction sealing head is partly formed by the tubular conductor element and partly by the support body and is substantially flat with the exception of a tooth (rib), which perpendicularly projects from the sealing device.

By using the induction sealing head described in the patent application EP2781325A1 to make the cross seals, it has been observed that the cross seals are relatively weak at the ends (namely at the outer edges). In particular, at the ends, the extension of the cross seals is significantly reduced (even by 50-60%) with respect to the central area and therefore, at the ends, the cross seals are relatively weak (namely subject to breakage in case of mechanical stress just a little more intense than normal when handling the containers).

### DESCRIPTION OF THE INVENTION

The object of the present invention is to provide an induction sealing head for an automatic machine, which sealing head is free from the drawbacks described above and, in particular, is easy and inexpensive to implement.

According to the present invention, an induction sealing head is provided for an automatic machine, as claimed in the appended claims.

### BRIEF DESCRIPTION OF THE DRAWINGS

The present invention will now be described with reference to the accompanying drawings, which illustrate an example of nonlimiting embodiment, wherein:
- Figure 1 is a perspective view of a container for pourable products;
- Figure 2 is a plan view of a wrapping sheet which is bent and heat-sealed to make the container of Figure 1;
- Figure 3 is a perspective view of the container of Figure 1 during the construction thereof, i.e. before the folding of the sealing fins and of the respective triangular wings;
- Figure 4 is a schematic view and with the removal of parts for clarity of a forming and filling machine which forms and fills the container of Figure 1 and is made according to the present invention;
- Figure 5 is a front perspective view and with the removal of parts for clarity of a sealing unit of the forming and filling machine of Figure 4;
- Figures 6 and 7 are two front perspective views and with the removal of parts for clarity of a detail of the sealing unit of Figure 5;
- Figure 8 is a front perspective view of an induction sealing head of the sealing unit of Figure 5;
- Figure 9 is a rear perspective view of the sealing head of Figure 8;
- Figure 10 is a front view of the sealing head of Figure 8;
- Figure 11 is an enlarged view of a detail of Figure 10;
- Figure 12 is a cross-sectional view of the sealing head of Figure 8;
- Figure 13 is a perspective view of a tubular conductor element of the sealing head of Figure 8;
- Figure 14 is a front view of a different embodiment of the sealing head of Figure 8;
- Figure 15 is an enlarged view of a detail of Figure 14;
- Figure 16 is a front view of a further embodiment of the sealing head of Figure 8;
- Figure 17 is an enlarged view of a detail of Figure 16;
- Figure 18 is a perspective view of a tubular conductor element with a circular section and a straight shape from which the tubular conductor element of Figure 13 is obtained; and
- Figures 19 and 20 are two schematic views of a tool used to shape the tubular conductor element with a circular section and a straight shape of Figure 18 to obtain the tubular conductor element of Figure 13.

### PREFERRED EMBODIMENT OF THE INVENTION

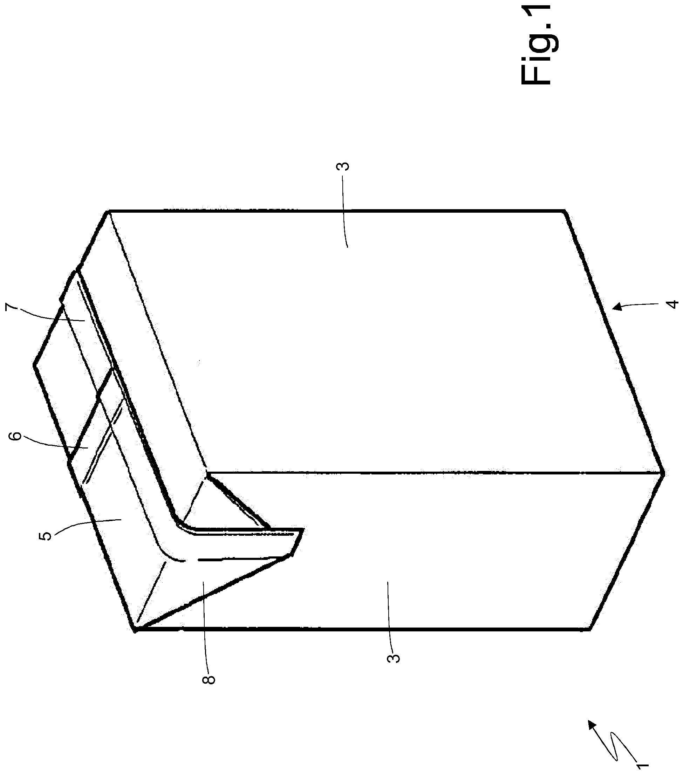

In Figure 1 number 1 denotes as a whole a container for pourable products that contains on the inside thereof a predetermined amount of a pourable product (i.e. a fluid product being formless and therefore can take the form of the object containing it, such as a liquid, powdery, granular or semi-solid product). The container 1 is generally used for the distribution of foodstuff products (for example wine, milk, fruit juices, syrups, drinks, sauces, creams, yoghurt, puree, preserved products, vegetables, legumes, canned tomatoes...).

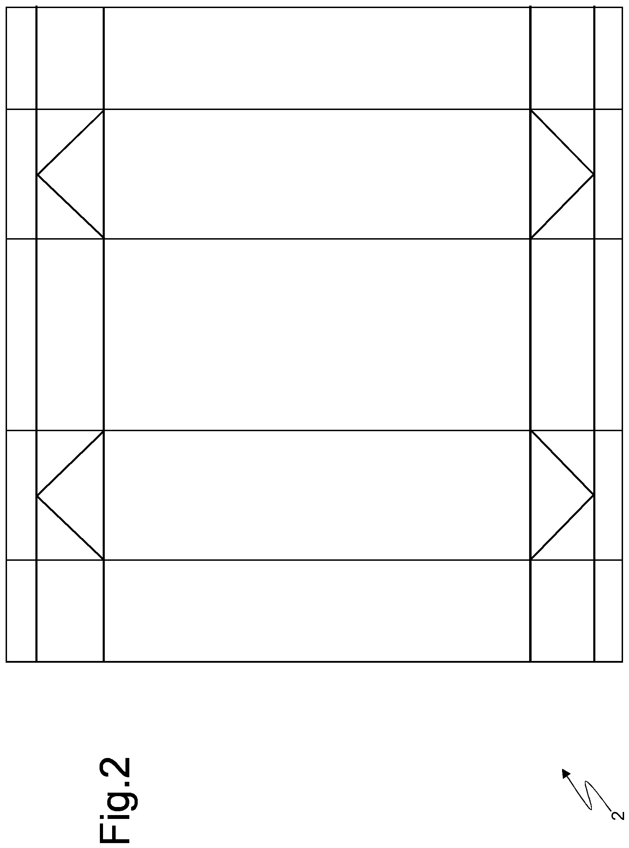

The container 1 is made by bending and sealing a multilayer wrapping sheet 2 (that is, formed from layers of different materials coupled together) illustrated in Figure 2. According to a possible and non-binding embodiment, the wrapping sheet 2 is obtained by an external layer made of transparent polyethylene (heat-sealable as it melts at relatively low temperatures), a subsequent structural layer made of cardboard, a subsequent barrier layer made of aluminium, and an inner layer of transparent polyethylene (heat-sealable as it melts at relatively low temperatures). According to a possible and non-binding embodiment, the wrapping sheet 2 is previously provided (typically by mechanical deformation performed with embossing rollers) with pre-weakened folding lines which guide the subsequent bending of the wrapping sheet 2 itself.

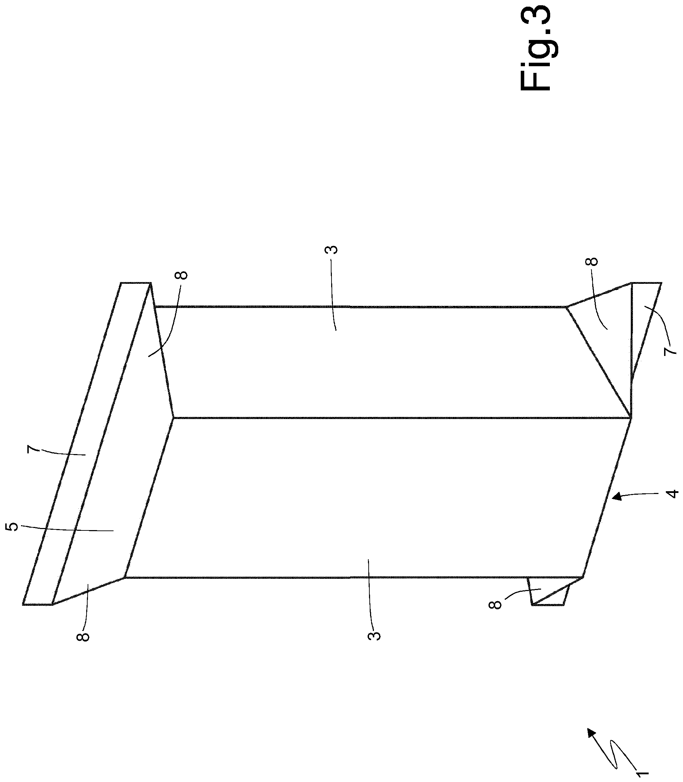

As illustrated in Figure 1, the container 1 has a parallelepiped shape and has four side walls 3 (two by two parallel and opposite each other) and two bottom walls 4 and 5 lower and upper, respectively, which are perpendicular to the four side walls 3. The container 1 comprises a longitudinal seal 6 and two cross seals 7, each of which is arranged at a respective bottom wall 4 or 5 and has a sealing fin which is initially perpendicular to the respective bottom wall 4 or 5 (as illustrated in Figure 3) and is then folded against the bottom wall 4 or 5 by 90° (as illustrated in Figure 1); each bottom wall 4 or 5 has at the ends of the same two triangular wings 8 (also called "*ears*") which can be folded against respective side walls 3 or against the bottom wall 4 or 5 itself. Typically, and as illustrated in Figure 1, the two triangular wings 8 of the upper bottom wall 5 are folded against respective side walls 3 (and fixed to the lateral walls 3 by means of heat-sealing) whereas the triangular wings 8 of the lower bottom wall 4 are folded against the lower bottom wall 4 itself (and fixed to the lower bottom wall 4 by means of heat-sealing).

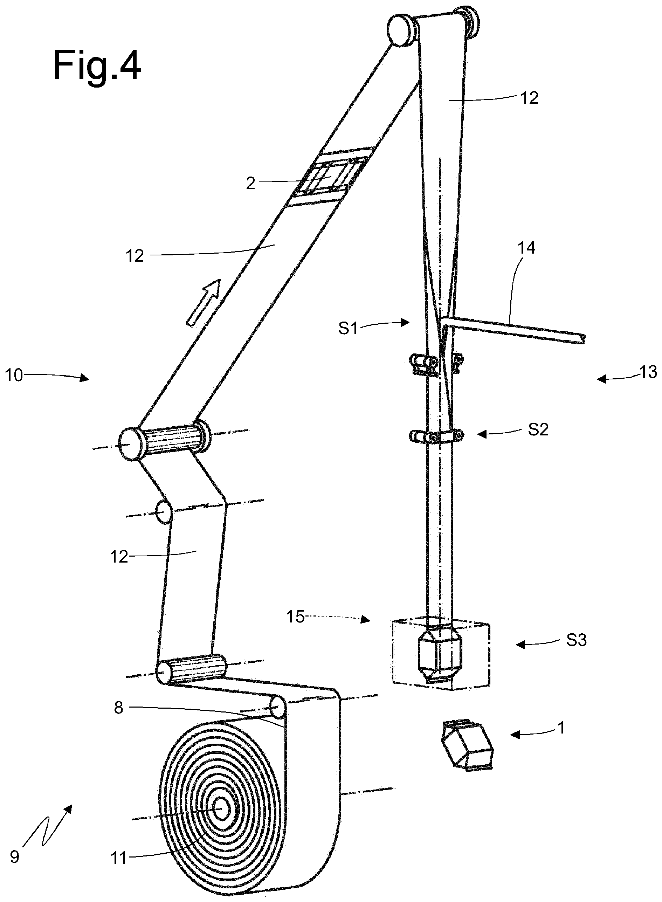

In Figure 4 number 9 denotes as a whole a forming and filling machine which forms and fills the container 1 illustrated in Figure 1 and described above.

The forming and filling machine 9 comprises a feeding conveyor 10 which unwind a strip 12 of wrapping material containing a succession of wrapping sheets 2 from a reel 11. Downstream of the feeding conveyor 10 a filling conveyor 13 is arranged, which feeds the strip 12 of wrapping material through a bending station S1, in which the strip 12 of wrapping material is bent in a tubular shape and is provided with the longitudinal seal 6; in particular, in the bending station S1, two opposite longitudinal edges of the strip 12 of wrapping material are overlapped on one another and then heat-sealed one to the other. Furthermore, the filling conveyor 13 feeds the strip 12 of wrapping material bent in a tubular shape through a filling station S2, in which a product dose is fed into the strip 12 of wrapping material bent in a tubular shape (by using a feeding duct 14 which is coupled to the strip 12 of wrapping material upstream of the bending station S1 and eventuates at the filling station S2). Finally, the filling conveyor 13 feeds the strip 12 of wrapping material bent in a tubular shape through a sealing station S3 in which the strip 12 of wrapping material bent in a tubular shape is provided with two opposite cross seals 7 to define the container 1. Simultaneously with the forming of the cross seals 7 (i.e. in the sealing station S3), the container 1 is separated from the strip 12 of wrapping material by means of a cross cut; alternatively, the cross cut instead of being simultaneous with the cross sealing could be performed after the cross sealing.

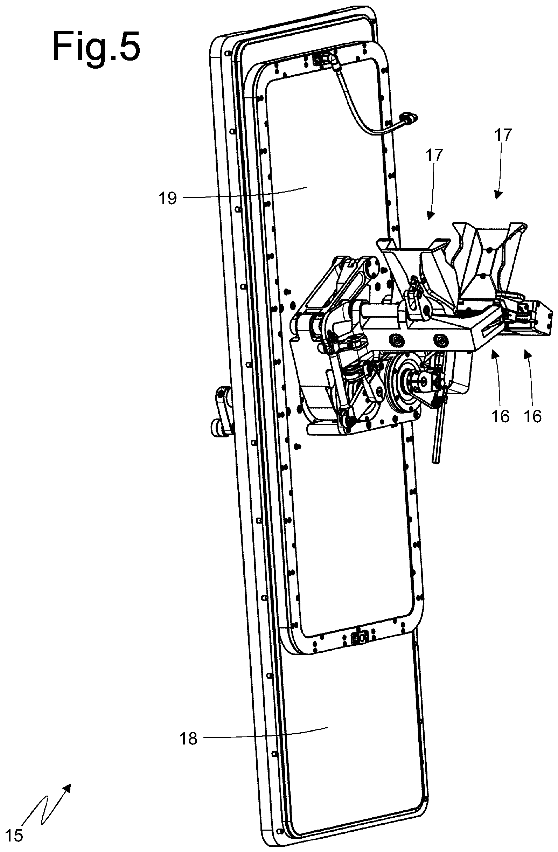

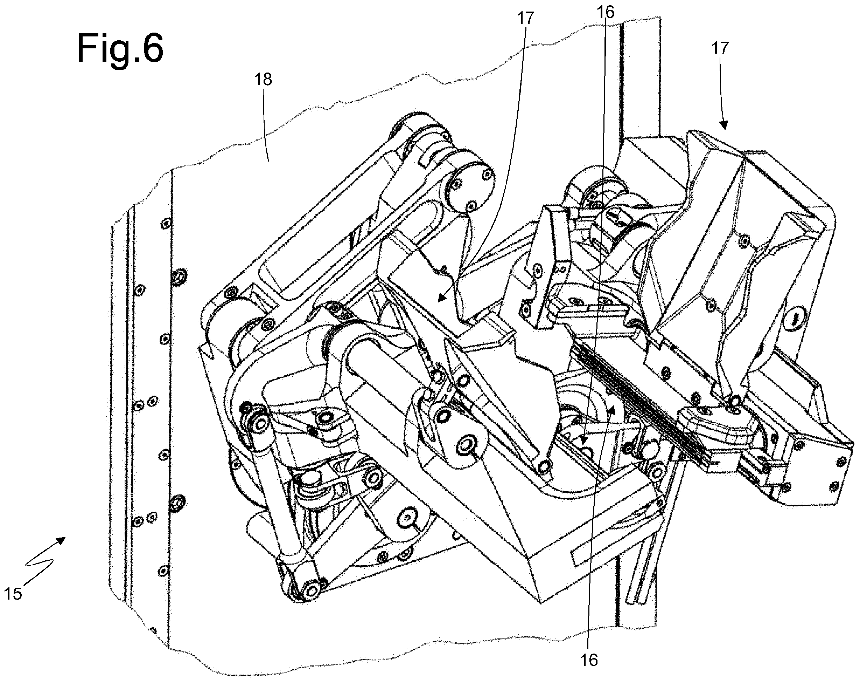

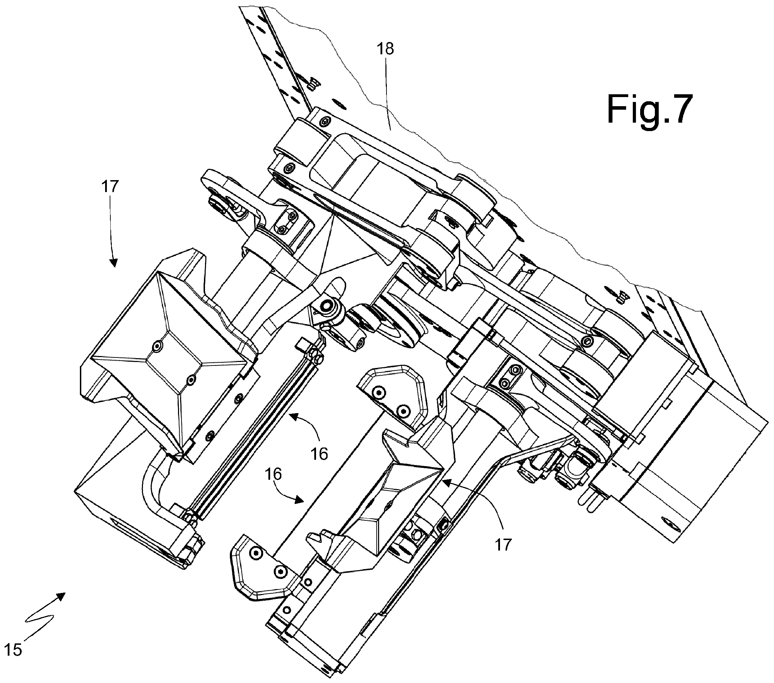

At the sealing station S3 a sealing unit 15 (schematically illustrated in Figure 4 and better illustrated in Figures 5 and 6 and 7) is arranged, which is provided with a pair of opposing induction sealing heads 16 which are cyclically pressed from opposite sides against the strip 12 of wrapping material bent in a tubular shape so as to clamp the strip 12 of wrapping material itself between them. The induction sealing heads 16 also support cutting elements to perform, together with the sealing, also the cross cutting of the strip 12 of wrapping material bent in a tubular shape. The sealing unit 15 also comprises a pair of hollow shells 17 which are movable together with the induction sealing heads 16 to embrace from opposite sides the strip 12 of wrapping material bent in a tubular shape so as to shape the strip 12 of wrapping material itself (i.e. in such a way as to give the strip 12 of wrapping material a definitive parallelepiped shape). In other words, together with the forming of the cross seals 7, the container 1 is shaped (by means of the pair of hollow shells 17 which compress the container 1 between them, thus imposing a predefined shape to the container 1) so as to assume a definitive parallelepiped shape (as initially the container 1 assumes a *"cushion-like"* shape).

As illustrated in Figure 5, the sealing unit 15 comprises a fixed part 18 rigidly mounted on the frame of the forming and filling machine 9 and a movable part 19 which moves, in use, relative to the fixed part 18 and is arranged facing the fixed part 18. In particular, the movable part 19 is formed by a slide which slides vertically relative to the fixed part 18 for example by means of the tracks obtained in the fixed part 18. In use, the movable part 19 cyclically slides back and forth (i.e. up and down) cyclically making a working stroke, along which the cross sealing of a container 1 is performed (still incorporated in the strip 12 of wrapping material bent in a tubular shape) following the continuous movement of the container 1 itself for a certain time, and a subsequent return stroke, along which no processing is performed and the movable part 19 is returned to the initial position to begin the processing of the next container 1.

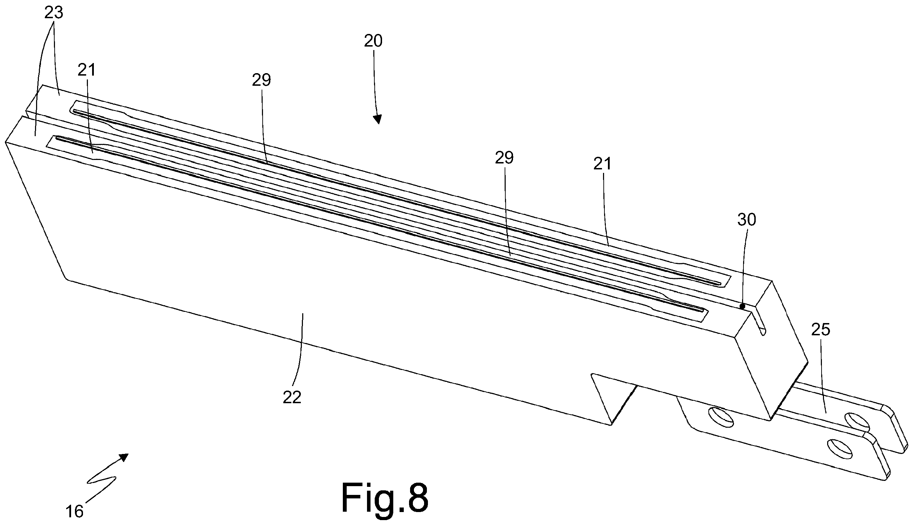

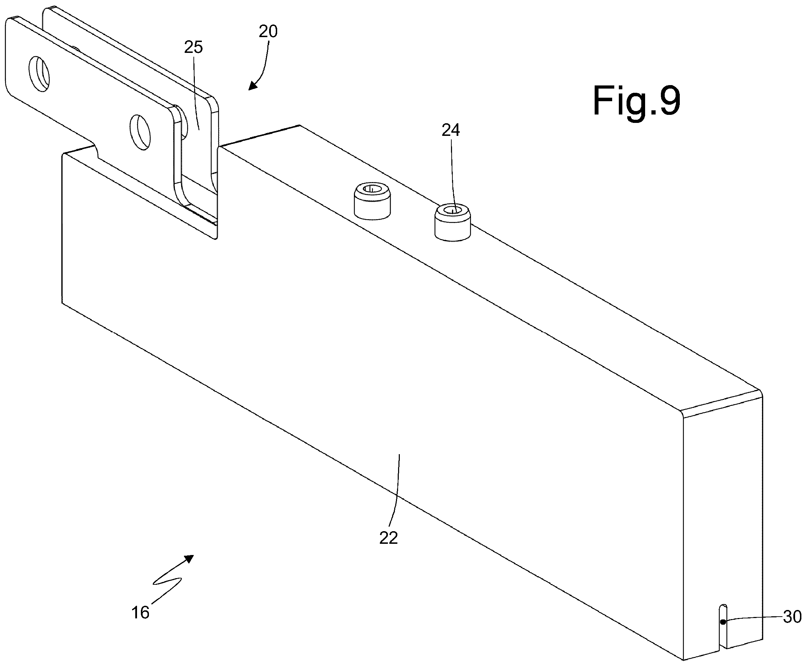

As illustrated in Figures 8 and 9, each induction sealing head 16 has a substantially parallelepiped shape and comprises a tubular conductor element 20 having two flat walls 21 in view (namely externally arranged and therefore completely visible from the outside) separated one from the other and side by side, each of which defines a sealing area. Furthermore, each sealing head 16 comprises a support body 22 made of insulating material (for example an epoxy resin based plastic material) which surrounds the tubular conductor element 20 and has a flat wall 23 in view (namely externally arranged and therefore completely visible from the outside) which is coplanar with the flat wall 21 and surrounds the flat walls 21 themselves.

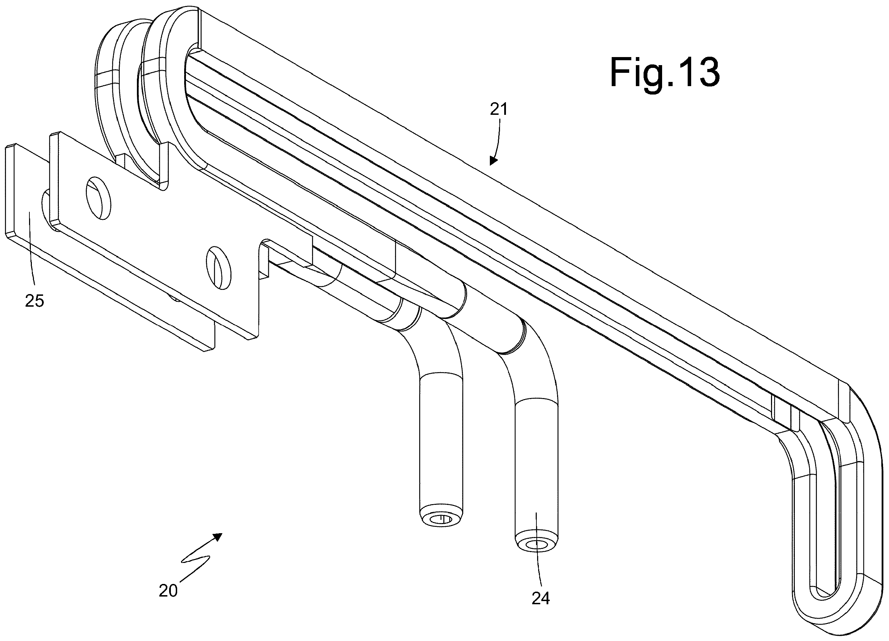

The tubular conductor element 20 has a relatively complex shape (well illustrated in Figure 13) and has two ends 24 (also shown in Figure 9) to which a hydraulic circuit is connected, adapt for circulating a cooling liquid inside the tubular conductor element 20; furthermore, two electric terminals 25 are coupled to the tubular conductor member 20, which are connected to an electric circuit adapt for circulating an alternating current with a relatively high frequency inside the tubular conductor element 20 which induces heat in the metallic layer of a multilayer wrapping sheet 2.

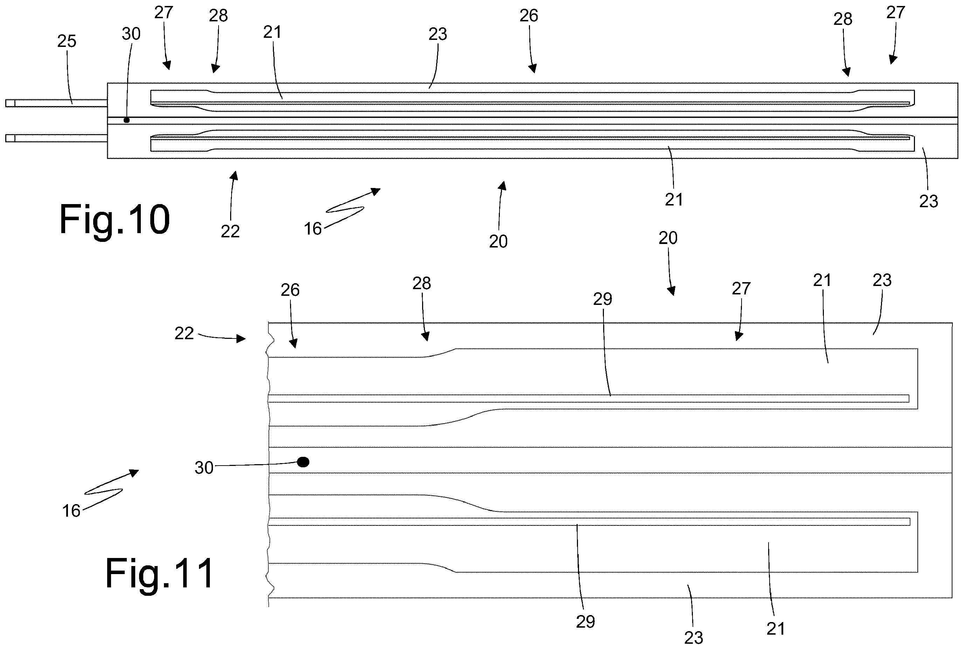

As better illustrated in Figures 10 and 11, each flat wall 21 of the tubular conductor element 20 has a single straight central portion 26 which comprises most of the flat wall 21 itself. Moreover, each flat wall 21 of the tubular conductor element 20 has two straight end portions 27 which are parallel and not aligned with the straight central portion 26 and two curved portions 28 which join the straight central portion to the two straight end portions 27; each curved portion 28 of each flat wall 21 is "S"-shaped for joining the corresponding portions 26 and 27 staggered one relative to the other. In other words, each flat wall 21 is "U"-shaped (namely has an arc shape), determined by being formed by the straight central portion 26 joined at the ends to the two straight end portions 27 which are staggered with respect to the straight central portion 26. It is important to note that each flat wall 21 comprises only three straight portions 26 and 27 and that the straight central portion 26 is more extended than the two straight portions 27 (indicatively the straight central portion 26 has an extension which is 7-14 times the extension of the two straight end portions 27).

The two straight end portions 27 of each flat wall 21 are arranged at the areas in which the wrapping sheet 2 making up the container 1 is bent in a "U" shape, namely at the areas in which the transition between "*in front"* and *"behind"* takes place.

As previously mentioned, the induction sealing head 16 is used to obtain the cross seal 7 of a container 1 which assumes a tubular shape thanks to a longitudinal seal 6 previously made; each curved portion 28 of each flat wall 21 of the tubular conductor element 20 faces towards the inside of the corresponding cross seal 7, namely inside the container 1 in which the cross seal 7 is made. Accordingly, the two flat walls 21 of the tubular conductor element 20 which are U-shaped have hollow portions having opposite orientations. According to a preferred but non-binding embodiment, each straight end portion 27 of each flat wall 21 is misaligned relative to the straight central portion 26 of a distance smaller than the cross size of the flat wall 21; in other words, the misalignment of the straight portions 27 relative to the straight central portion 26 is smaller than the cross size of the flat wall 21.

According to a preferred embodiment, each flat wall 21 comprises a tooth 29 which perpendicularly projects from the flat wall 21, has a straight shape, and extends, in a straight manner, along the straight central portion 26, along the curved portions 28 and along the straight end portions 27 of the flat wall 21. In other words, each tooth 29 is perfectly straight even though the corresponding flat wall 21 being curved (namely "U"-shaped).

Each induction sealing head 16 centrally has a slot 30 which is formed in the support body 22, is arranged between the two flat walls 21 of the tubular conductor element 20 and is adapted to house the blade which performs the transverse cutting of the belt 12 of wrapping material.

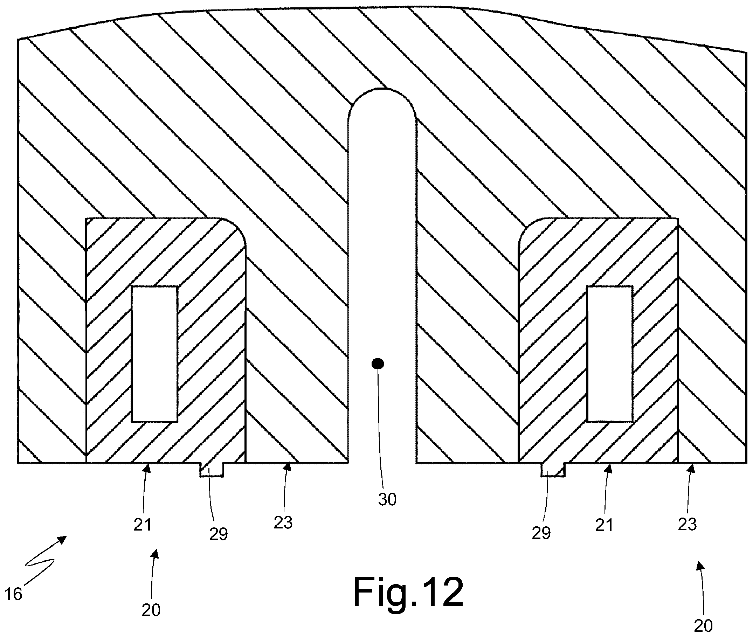

According to the embodiment illustrated in Figures 8-13, each flat wall 21 has a constant cross size, namely at each point of the flat wall 21 the cross size of the flat wall 21 is constant.

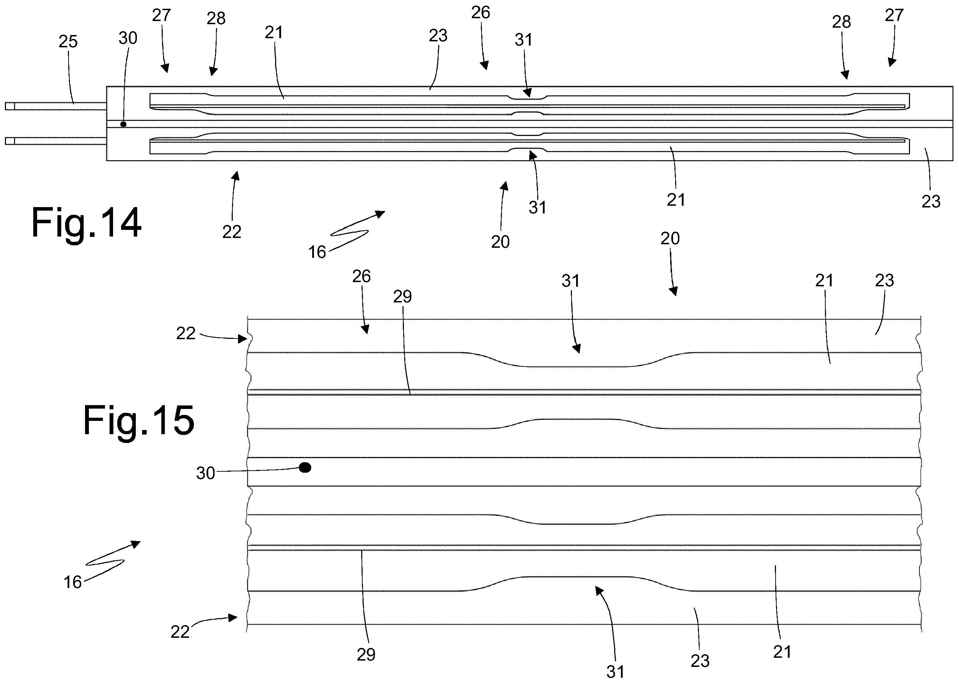

In the alternative embodiment illustrated in Figures 14 and 15, each flat wall 21 of the tubular conductor element 20 centrally has (namely at the straight central portion 26) a narrowing 31, which locally decreases the width of the flat wall 21 itself. In other words, each flat wall 21 of the tubular conductor element 20 centrally has (namely at the narrowing 31) a first width and has a laterally (namely outside the narrowing 31) a second width which is constant and greater than the first width; the ratio between the first width and the second width ranges between 40% and 75%.

As previously stated, each induction sealing head 16 is used to make a cross seal 7 of a container 1 which assumes a tubular shape thanks to a longitudinal seal 6 previously made; the narrowing 31 of each flat wall 21 is arranged at the longitudinal seal 6 of the container 1.

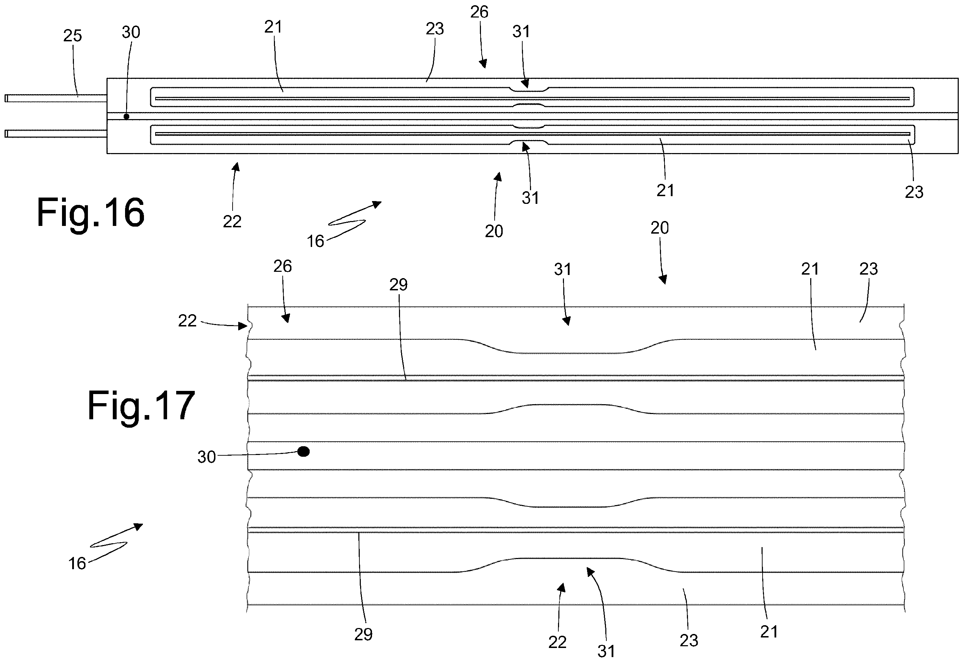

In the further embodiment illustrated in Figures 15 and 16, each flat wall 21 of the tubular conductor element 20 centrally has (namely at the straight central portion 26) the narrowing 31, but is devoid of the curved portions 28 (namely it is perfectly straight along its entire extension).

The above-described induction sealing head 16 has numerous advantages.

Firstly, the aforesaid induction sealing head 16 allows to obtain more resistant cross seals 7 particularly at the ends.

At the ends, the width of the cross seals 7 is reduced significantly (even by 50-60%) with respect to the central area due to an inevitable deformation of the magnetic field produced by the electric current that circulates along the tubular conductor element 20 and which induces parasitic currents which are heating in the metal layer of the wrapping sheet 2. When the flat walls 21 of the tubular conductor element 20 are perfectly straight, at the ends the cross seals 7 are relatively weak (namely subject to breakage in the case of mechanical stress just more intense than normal when handling the containers) as much narrower than normal and symmetrically arranged between *"inside"* and *"outside"* of the containers 1. Instead, when the flat walls 21 of the tubular conductor element 20 are curved (as described above) at the ends, the cross seals 7 are always and inevitably narrower but they are also moved towards the inside of the containers 1, i.e. each cross seal 7 has at its ends an extent (width) almost normal towards the inside of the corresponding container 1 and has an almost null extent (width) towards the outside of the corresponding container 1; in this way, the seal capacity of the cross seals 7 at the ends is significantly increased even though the cross seals 7 at the ends have a reduced extent (width).

Moreover, the narrowing 31 of each flat wall 21 at the longitudinal seal 6 of the container 1 allows to intensify the heating action (namely the sealing action) at the longitudinal seal 6 to the advantage of making a cross seal 7 more robust; in fact, at the longitudinal seal 6 the wrapping sheet 2 is locally thicker as a result of the overlaps due to the longitudinal seal 6 and therefore requires a more intense heating to obtain a high quality sealing.

Finally, the above-described induction sealing head 16 is simple and inexpensive to manufacture, as compared to a similar induction sealing head 16 devoid of the curved portions 28 and/or the narrowing 31, it requires only a simple and fast mechanical shaping of the tubular conductor element 20.

The method for manufacturing the induction sealing head 16 described above is described in the following.

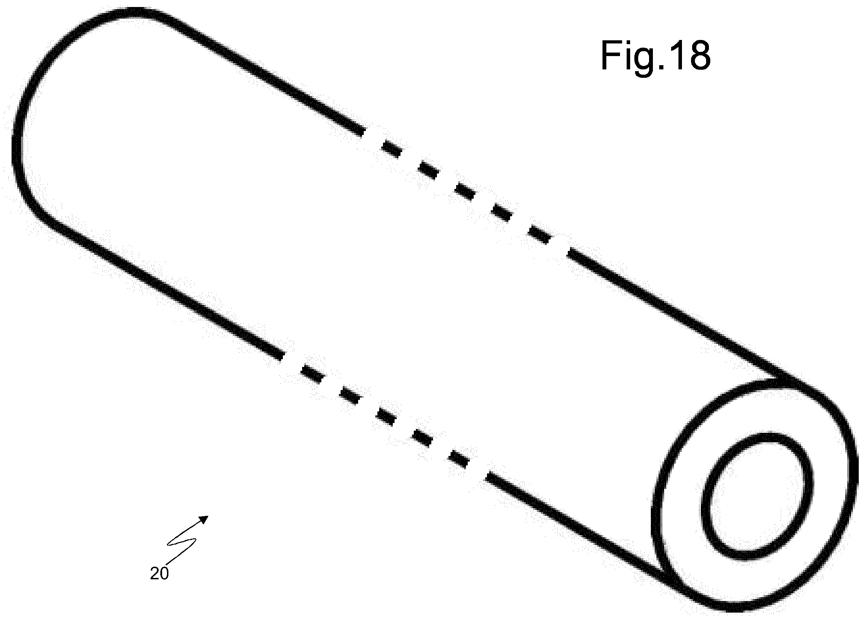

Initially, a tubular conductor element 20 with a circular section and a straight shape of the type illustrated in Figure 18 is provided; namely, initially the tubular conductor element 20 has a circular transversal section and is completely straight (on the market copper tubes with these characteristics are readily available and can therefore be used as a starting base for the tubular conductor element 20). Subsequently, the tubular conductor element 20 is shaped by mechanical deformations of plastic type to give the tubular conductor element 20 itself the final shape illustrated in Figure 13 (with the exception of the electrical terminals 25 which are separately built and then sealed to the remaining part of the tubular conductor element 20). When the final shape has been given to the tubular conductor element 20, the support body 22 of insulating material is over-moulded around the tubular conductor element 20; namely, the tubular conductor element 20 is inserted inside a mould in which the insulating material, which forms the support body 22 around the tubular conductor element 20, is injected (in this way the support body 22 incorporates on the inside thereof the tubular conductor element 20).

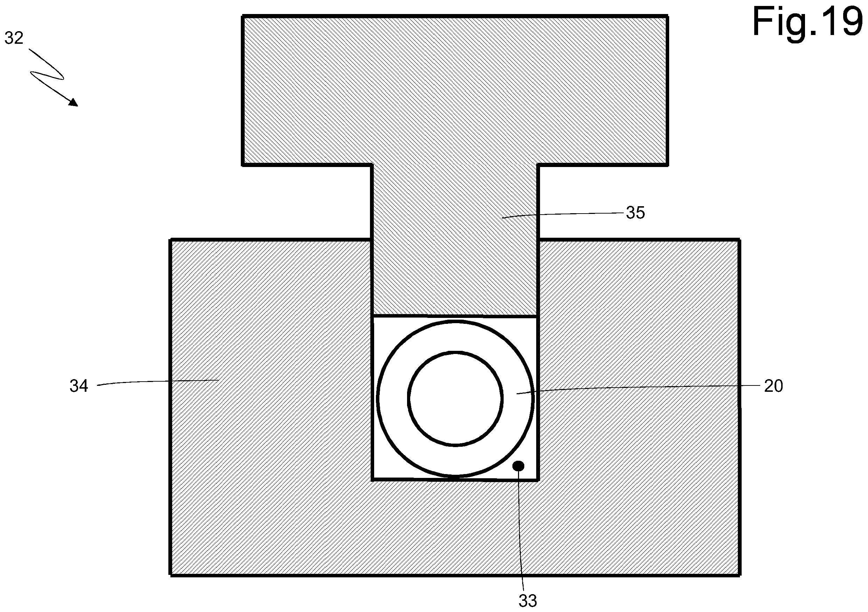

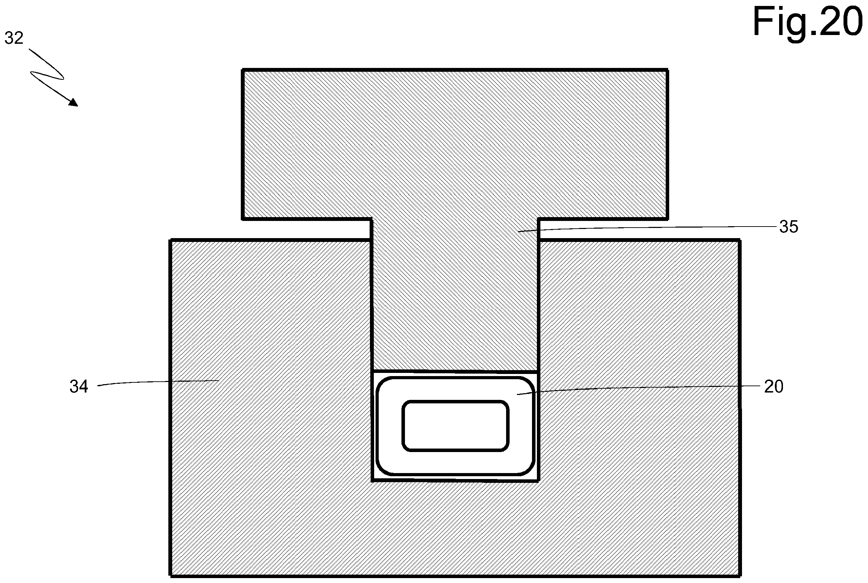

The mechanical processing by means of plastic deformation of the tubular conductor element 20 with a circular section allows to confer to the tubular conductor element 20 the two flat walls 21 in a central portion of the tubular conductor element 20. In particular, the mechanical processing by means of plastic deformation of the tubular conductor element 20 with a circular section involves giving a rectangular section at least to the central portion of the tubular conductor element 20. This processing is carried out, for example, by means of the tool 32 illustrated in Figures 19 and 20 comprising a parallelepiped shape deformation chamber 33 formed in a processing body 34; the size of the deformation chamber 33 is variable due to the action of a piston 35. In use, the central portion of the tubular conductor element 20 with a circular cross section is inserted into the deformation chamber 33 (as illustrated in Figure 19) and then the piston 35 is forcibly pushed into the deformation chamber 33 (as illustrated in Figure 20) so as to cause plastic deformation of the tubular conductor element 20 which then assumes the shape of the deformation chamber 33, namely assumes a rectangular cross-section.

Preferably, the support body 22 is over-moulded around the flat walls 21 of the tubular conductor element 20 and leaves the flat walls 21 uncovered, namely without covering the flat walls 21; in other words, the support body 22 is over-moulded around the tubular conductor element 20 so as to form the flat wall 23 which is coplanar with the flat walls 21 and surrounds the flat walls 21 (namely does not cover the flat walls 21 and leaves the flat walls 21 themselves exposed).

According to a possible embodiment, after having over-moulded the support body 22 around the tubular conductor element 20, each flat wall 21 of the tubular conductor element 20 is mechanically processed by means of chipping machining, (for example, by means of a miller), so as to obtain, in the flat wall 21, the corresponding tooth 29 which perpendicularly projects from the flat wall 21 itself. In this step, only the flat walls 21 of the tubular conductor element 20 which are initially projecting relative to the flat wall 23 of the support body 22 can be processed, or else both the flat walls 21 of the tubular conductor element 20, and the flat wall 23 of the support body 22 can be processed by chipping machining so as to keep the flat wall 23 coplanar with the flat walls 21.

According to an alternative embodiment, before the support body 22 is over-moulded around the tubular conductor element 20, each flat wall 21 is mechanically processed by means of chipping machining, (for example by means of a miller) so as to obtain, in the flat wall 21, the corresponding tooth 29 which perpendicularly projects from the flat wall 21 itself.

According to a further embodiment, the mechanical processing by means of plastic deformation of the tubular conductor element 20 with a circular section provides to form in each flat wall 21 the corresponding tooth 29 which perpendicularly projects from the flat wall 21; in other words, the deformation chamber 33 is shaped so as to also form the tooth 29 during the plastic deformation of the tubular conductor element 20 with a circular section.

The above-described methods for manufacturing the induction sealing head 16 have numerous advantages.

Firstly, the above-described methods for manufacturing the sealing head 16 allow to avoid producing a large quantity of *"noble"* material which is discarded (in particular from the metallic material forming the tubular conductor element 20, generally copper, which has a rather high cost); consequently, the above-described methods for manufacturing the induction sealing head 16 allow to minimize production costs.

Moreover, the above-described methods for manufacturing the sealing head 16 allow to reduce production times to a minimum.

## Claims

1. An induction sealing head (16) for an automatic machine (9); the induction sealing head (16) comprises:
a tubular conductor element (20) having at least one first flat wall (21), which defines a sealing area and has a non-straight shape; and
a support body (22) of insulating material, which surrounds the tubular conductor element (20) and has a second flat wall (23), which is coplanar to the first flat wall (21) and surrounds the first flat wall (21);
wherein the induction sealing head (16) is **characterized in that** the first flat wall (21) of the tubular conductor element (20) has:
one single straight central portion (26);
two straight end portions (27), which are parallel and not aligned with the straight central portion (26); and
two curved portions (28), which join the straight central portion (26) to the two straight end portions (27).

2. An induction sealing head (16) according to claim 1, wherein the flat wall (21) of the tubular conductor element (20) is "U"-shaped.

3. An induction sealing head (16) according to claim 1 or 2, wherein:
the induction sealing head (16) is used for manufacturing a cross seal (7) of a container (1), which assumes a tubular shape thanks to a longitudinal seal (6) previously made; and
each curved portion (28) faces the inside of the cross seal (7), namely the inside of the container (1) in which the cross seal (7) is made.

4. An induction sealing head (16) according to claim 1, 2 or 3, wherein the first flat wall (21) comprises a tooth (29), which perpendicularly projects from the first flat wall (21), has a straight shape, and extends, in a straight manner, along the straight central portion (26), along the curved portions (18) and along the straight end portions (27) of the first flat wall (21).

5. An induction sealing head (16) according to any of the claims from 1 to 4, wherein each straight end portion (27) of the first flat wall (21) is misaligned relative to the straight central portion (26) by a distance that is smaller than the cross size of the first flat wall (21).

6. An induction sealing head (16) according to any of the claims from 1 to 5, wherein each curved portion (28) of the first flat wall (21) is "S"-shaped.

7. An induction sealing head (16) according to any of the claims from 1 to 6 , wherein:
the induction sealing head (16) is used for manufacturing a cross seal (7) of a container (1), which assumes a tubular shape thanks to a longitudinal seal (6) previously made; and
the two straight end portions (27) of the first flat wall (21) are arranged in the areas in which a wrapping sheet (2) making up the container (1) is bent in a "U" shape.

8. An induction sealing head (16) according to any of the claims from 1 to 7, wherein the first flat wall (21) has a constant cross size.

9. An induction sealing head (16) according to any of the claims from 1 to 7, wherein the first flat wall (21) of the tubular conductor element (20) centrally has a narrowing (31), which locally decreases the width of the first flat wall (21).

10. An induction sealing head (16) according to any of the claims from 1 to 7, wherein the first flat wall (21) of the tubular conductor element (20) centrally has a first width and laterally has a second width, which is constant and greater than the first width.

11. An induction sealing head (16) according to claim 9 or 10, wherein:
the induction sealing head (16) is used for manufacturing a cross seal (7) of a container (1), which assumes a tubular shape thanks to a longitudinal seal (6) previously made; and
a narrower central portion of the first flat wall (21) is arranged in the area of the longitudinal seal (6) of the container (1).

## Patentansprüche

1. Induktionsversiegelungskopf (16) für eine automatische Maschine (9); wobei der Induktionsversiegelungskopf (16) umfasst:
ein röhrenförmiges Leiterelement (20) mit mindestens einer ersten ebenen Wand (21), die einen Versiegelungsbereich festlegt und eine nicht geradlinige Form aufweist; und
einen Trägerkörper (22) aus Isoliermaterial, der das röhrenförmige Leiterelement (20) umgibt und eine zweite ebene Wand (23) aufweist, die in derselben Ebene liegt wie die erste ebene Wand (21) und die erste ebene Wand (21) umgibt;
wobei der Induktionsversiegelungskopf (16) **dadurch gekennzeichnet ist, dass** die erste ebene Wand (21) des röhrenförmigen Leiterelements (20) aufweist:
einen einzelnen geraden mittigen Abschnitt (26);
zwei gerade Endabschnitte (27), die parallel verlaufen und nicht nach dem geraden mittigen Abschnitt (26) ausgerichtet sind; und
zwei gebogene Abschnitte (28), die den geraden mittigen Abschnitt (26) mit den beiden geraden Endabschnitten (27) verbinden.

2. Induktionsversiegelungskopf (16) nach Anspruch 1, wobei die ebene Wand (21) des röhrenförmigen Leiterelements (20) U-förmig ist.

3. Induktionsversiegelungskopf (16) nach Anspruch 1 oder 2, wobei:
der Induktionsversiegelungskopf (16) zum Herstellen einer Quernaht (7) eines Behälters (1) verwendet wird, der aufgrund einer zuvor angefertigten Längsnaht (6) eine schlauchförmige Gestalt annimmt; und
jeder gebogene Abschnitt (28) der Innenseite der Quernaht (7) zugewandt ist, und zwar der Innenseite des Behälters (1), in dem die Quernaht (7) angefertigt wird.

4. Induktionsversiegelungskopf (16) nach Anspruch 1, 2 oder 3, wobei die erste ebene Wand (21) einen Zahn (29) umfasst, der rechtwinklig von der ersten ebenen Wand (21) vorsteht, eine gerade Form aufweist und den geraden mittigen Abschnitt (26) entlang, die gebogenen Abschnitte (18) entlang und die geraden Endabschnitte (27) der ersten ebenen Wand (21) entlang gerade verläuft.

5. Induktionsversiegelungskopf (16) nach einem der Ansprüche 1 bis 4, wobei jeder gerade Endabschnitt (27) der ersten ebenen Wand (21) bezogen auf den geraden mittigen Abschnitt (26) um ein Stück versetzt ist, das kürzer ist als die Querabmessung der ersten ebenen Wand (21) .

6. Induktionsversiegelungskopf (16) nach einem der Ansprüche 1 bis 5, wobei jeder gebogene Abschnitt (28) der ersten ebenen Wand (21) S-förmig ist.

7. Induktionsversiegelungskopf (16) nach einem der Ansprüche 1 bis 6 , wobei:
der Induktionsversiegelungskopf (16) zum Herstellen einer Quernaht (7) eines Behälters (1) verwendet wird, der aufgrund einer zuvor angefertigten Längsnaht (6) eine schlauchförmige Gestalt annimmt; und
die beiden geraden Endabschnitte (27) der ersten ebenen Wand (21) in den Bereichen angeordnet sind, in denen eine Verpackungsbahn (2), aus der der Behälter (1) gebildet ist, in einer U-Form gebogen ist.

8. Induktionsversiegelungskopf (16) nach einem der Ansprüche 1 bis 7, wobei die erste ebene Wand (21) eine konstante Querabmessung aufweist.

9. Induktionsversiegelungskopf (16) nach einem der Ansprüche 1 bis 7, wobei die erste ebene Wand (21) des röhrenförmigen Leiterelements (20) mittig eine Einengung (31) aufweist, die die Breite der ersten ebenen Wand (21) lokal verringert.

10. Induktionsversiegelungskopf (16) nach einem der Ansprüche 1 bis 7, wobei die erste ebene Wand (21) des röhrenförmigen Leiterelements (20) mittig eine erste Breite aufweist und seitlich eine zweite Breite aufweist, die konstant ist und größer als die erste Breite.

11. Induktionsversiegelungskopf (16) nach Anspruch 9 oder 10, wobei:
der Induktionsversiegelungskopf (16) zum Herstellen einer Quernaht (7) eines Behälters (1) verwendet wird, der aufgrund einer zuvor angefertigten Längsnaht (6) eine schlauchförmige Gestalt annimmt; und
ein schmalerer mittiger Abschnitt der ersten ebenen Wand (21) im Bereich der Längsnaht (6) des Behälters (1) angeordnet ist.

## Revendications

1. Tête de scellement par induction (16) pour une machine automatique (9), la tête de scellement par induction (16) comprenant :
un élément conducteur tubulaire (20) ayant au moins une première paroi plate (21) qui définit une zone de scellement et présente une forme non droite ; et
un corps de support (22) d'un matériau isolant, qui entoure l'élément conducteur tubulaire (20) et comporte une seconde paroi plate (23) qui est coplanaire à la première paroi plate (21) et entoure la première paroi plate (21) ;
dans laquelle la tête de scellement par induction (16) est **caractérisée en ce que** la première paroi plate (21) de l'élément conducteur tubulaire (20) comporte :
une seule partie centrale droite (26) ;
deux parties d'extrémité droites (27) qui sont parallèles et ne sont pas alignées sur la partie centrale droite (26) ; et
deux parties incurvées (28) qui relient la partie centrale droite (26) aux deux parties d'extrémité droites (27).

2. Tête de scellement par induction (16) selon la revendication 1, dans laquelle la paroi plate (21) de l'élément conducteur tubulaire (20) se présente sous la forme d'un « U ».

3. Tête de scellement par induction (16) selon la revendication 1 ou 2, dans laquelle :
la tête de scellement par induction (16) est utilisée pour fabriquer un joint d'étanchéité transversal (7) d'un récipient (1), qui prend une forme tubulaire grâce à un joint d'étanchéité longitudinal (6) réalisé auparavant ; et
chaque partie incurvée (28) est orientée vers l'intérieur du joint d'étanchéité transversal (7), à savoir vers l'intérieur du récipient (1) dans lequel le joint d'étanchéité transversal (7) est réalisé.

4. Tête de scellement par induction (16) selon la revendication 1, 2 ou 3, dans laquelle la première paroi plate (21) comprend une dent (29) qui fait saillie perpendiculairement depuis la première paroi plate (21), présente une forme droite et s'étend, de manière droite, le long de la partie centrale droite (26), le long des parties incurvées (18) et le long des parties d'extrémité droites (27) de la première paroi plate (21) .

5. Tête de scellement par induction (16) selon l'une quelconque des revendications 1 à 4, dans laquelle chaque partie d'extrémité droite (27) de la première paroi plate (21) est mal alignée par rapport à la partie centrale droite (26) par une distance qui est plus petite que la taille transversale de la première paroi plate (21).

6. Tête de scellement par induction (16) selon l'une quelconque des revendications 1 à 5, dans laquelle chaque partie incurvée (28) de la première paroi plate (21) se présente sous la forme d'un « S ».

7. Tête de scellement par induction (16) selon l'une quelconque des revendications 1 à 6, dans laquelle :
la tête de scellement par induction (16) est utilisée pour fabriquer un joint d'étanchéité transversal (7) d'un récipient (1), qui prend une forme tubulaire grâce à un joint d'étanchéité longitudinal (6) réalisé auparavant ; et
les deux parties d'extrémité droites (27) de la première paroi plate (21) sont agencées dans les zones dans lesquelles une feuille d'emballage (2) composant le récipient (1) est pliée selon une forme de « U ».

8. Tête de scellement par induction (16) selon l'une quelconque des revendications 1 à 7, dans laquelle la première paroi plate (21) présente une taille transversale constante.

9. Tête de scellement par induction (16) selon l'une quelconque des revendications 1 à 7, dans laquelle la première paroi plate (21) de l'élément conducteur tubulaire (20) présente au centre un rétrécissement (31) qui réduit localement la largeur de la première paroi plate (21).

10. Tête de scellement par induction (16) selon l'une quelconque des revendications 1 à 7, dans laquelle la première paroi plate (21) de l'élément conducteur tubulaire (20) présente au centre une première largeur et présente latéralement une seconde largeur qui est constante et plus importante que la première largeur.

11. Tête de scellement par induction (16) selon la revendication 9 ou 10, dans laquelle :
la tête de scellement par induction (16) est utilisée pour fabriquer un joint d'étanchéité transversal (7) d'un récipient (1), qui prend une forme tubulaire grâce à un joint d'étanchéité longitudinal (6) réalisé auparavant ; et
une partie centrale plus étroite de la première paroi plate (21) est agencée dans la zone du joint d'étanchéité longitudinal (6) du récipient (1).
